# EUROPEAN PATENT APPLICATION

(11) **EP 4 391 328 A1**
(43) Date of publication of application: **26.06.2024**
(21) Application number: 22870012.6
(22) Date of filing: 14.09.2022
(51) Int. Cl.: H02K 11/38, F16H 1/06, F16H 1/16, H02K 7/10

(54) **ACTUATOR**

(30) Priority: 14.09.2021 JP 2021149410
(71) Applicant: Aichi Steel Corporation, Tokai-shi, Aichi 476-8666 (JP)
(72) Inventor: KIM, Choongsik, Tokai-shi, Aichi 476-8666 (JP); TANAKA, Shougo, Tokai-shi, Aichi 476-8666 (JP); KAYANO, Masahiro, Tokai-shi, Aichi 476-8666 (JP)
(74) Representative: Barker Brettell LLP
(86) International application number: PCT/JP2022/034465
(87) International publication number: WO 2023/042865

(57) **Abstract**

In an actuator, a control board is situated between an electric motor and a worm wheel, and a connector is disposed on the control board. Thus, a longitudinal dimension of the actuator is easily reduced. Since the worm wheel is situated on a same side as an output shaft relative to a worm, a width of the actuator is easily reduced.

## Description

### CROSS-REFERENCE TO RELATED APPLICATION

This international application claims the benefit of Japanese Patent Application No. 2021-149410 filed on September 14, 2021 with the Japan Patent Office, and the entire disclosure of Japanese Patent Application No. 2021-149410 is incorporated herein by reference.

### TECHNICAL FIELD

The present disclosure relates to an actuator having an electric motor as a driving source.

### BACKGROUND ART

An actuator disclosed in Patent Document 1 comprises a first speed reducer including a gear disposed at an end of a worm and a gear disposed on an output shaft of an electric motor, and a second speed reducer including the worm and a worm wheel.

### PRIOR ART DOCUMENTS

### PATENT DOCUMENTS

Patent Document 1: Japanese Unexamined Patent Application Publication No. 2019-187028

### SUMMARY OF THE INVENTION

### PROBLEMS TO BE SOLVED BY THE INVENTION

In the actuator disclosed in Patent Document 1, a connector for an external connection is situated on a side opposite to the electric motor across the worm wheel in a direction parallel to the output shaft of the electric motor (hereinafter also referred to as "longitudinal direction"). Thus, it is difficult to reduce a size in the longitudinal direction (hereinafter also referred to as "longitudinal dimension") of the actuator disclosed in Patent Document 1.

In consideration of the aforementioned problem, the present disclosure will disclose examples of an actuator having a longitudinal dimension that can be easily reduced.

### MEANS FOR SOLVING THE PROBLEMS

An actuator according to one aspect of the present disclosure includes an electric motor; a first gear disposed on an output shaft of the electric motor; a second gear meshed with the first gear to cooperate with the first gear and transmit a rotation of the output shaft as a decelerated rotation; a worm extending in a direction parallel to the output shaft, the second gear being disposed on one end side of the worm in a direction of extension of the worm; a worm wheel meshed with the worm and situated on the same side as the output shaft relative to the worm; and a control board for controlling the electric motor, the control board being situated between the electric motor and the worm wheel. The control board includes a connector for an external connection.

Compared with the actuator disclosed in Patent Document 1, the actuator having the aforementioned configuration has a longitudinal dimension that is easily reduced.

### BRIEF DESCRIPTION OF THE DRAWINGS

Embodiments of the present disclosure will be described hereinafter with reference to the accompanying drawings.
FIG. 1 is a diagram showing an actuator according to a first embodiment.
FIG. 2 is a diagram showing a first speed reducer and other elements of the actuator according to the first embodiment.
FIG. 3 is a diagram showing a configuration for detecting a rotation of an electric motor.

### EXPLANATION OF REFERENCE NUMERALS

1...actuator; 10...electric motor; 11...output shaft; 20...first speed reducer; 21...first gear; 22...second gear; 30...second speed reducer; 31...worm; 32...worm wheel; 40...controller; 41...control board; 42...connector; 43...brush; 44...commutator; 45...power supplier; 46...sensor; 46A...permanent magnet.

### MODE FOR CARRYING OUT THE INVENTION

The embodiments described below are examples of embodiments that belong to the technical scope of the present disclosure. Matters used to specify the invention or the like recited in the claims will not be limited to particular configurations, structures or the like described in the embodiments below.

Two or more of each of members or parts explained below may be provided as long as it is technically practicable.

### (First Embodiment)

### <1. Outline of Actuator>

The present embodiment is one example of an actuator of the present disclosure being applied to actuators for vehicles such as a wiper driving device and a power window device.

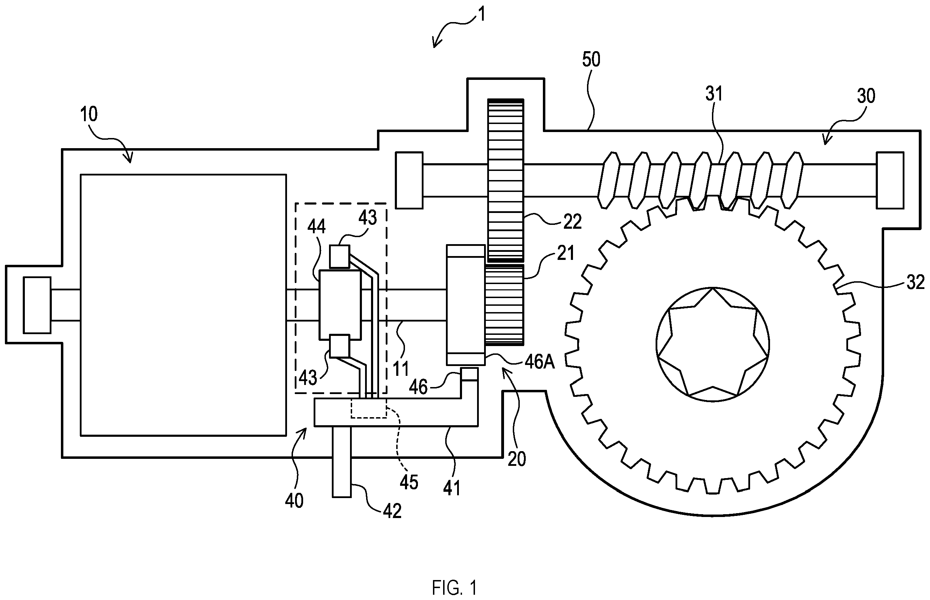

As shown in FIG. 1, an actuator 1 according to the present embodiment includes at least an electric motor 10, a first speed reducer 20, a second speed reducer 30, a controller 40, a housing 50 for housing these elements 10 to 40, and the like.

The electric motor 10 is a driving source that generates a rotational driving force. The first speed reducer 20 and the second speed reducer 30 are speed reduction devices for externally outputting power output of the electric motor 10 as a decelerated rotation. The controller 40 controls the rotation and cessation of the electric motor 10.

### <2. Details of Each Element>

### <2.1 First Speed Reducer>

The first speed reducer 20 includes a first gear 21, a second gear 22, and the like. The first gear 21 is disposed on a leading end side of an output shaft 11 of the electric motor 10 and integrally rotates with the output shaft 11.

The second gear 22 meshes with the first gear 21 and cooperates with the first gear 21 to transmit the rotation of the output shaft 11 as a decelerated rotation. Although it does not limit the present disclosure, the first gear 21 and the second gear 22 according to the present embodiment include spur gears or helical gears.

### <2.2 Second Speed Reducer>

The second speed reducer 30 includes a worm 31, a worm wheel 32, and the like. The worm 31 extends in a direction parallel to the output shaft 11 of the electric motor 10 (hereinafter also referred to as "longitudinal direction"), and the second gear 22 is disposed on one end side of the worm 31 in a direction of extension of the worm 31 (on the left side of FIG. 1). The worm 31 integrally rotates with the second gear 22.

The worm wheel 32 meshes with the worm 31 to rotate and is situated on the same side as the output shaft 11 relative to the worm 31. In other words, the output shaft 11 and the worm wheel 32 are situated on the bottom side of FIG. 1 relative to the worm 31.

The second speed reducer 30 transmits the rotation of the electric motor 10, which was transmitted by the first speed reducer 20 as a decelerated rotation, as a further decelerated rotation. The decelerated rotation transmitted by the second speed reducer 30 is externally outputted by using a central shaft (not illustrated) of the worm wheel 32 as an output shaft.

### <2.3 Controller>

The controller 40 includes at least a control board 41, a connector 42, a brush 43, a commutator 44, and the like. The control board 41 is situated between the electric motor 10 and the worm wheel 32 with its board surface facing the output shaft 11.

The control board 41 is situated on a side opposite to the worm 31 across the output shaft 11. In other words, the control board 41 is situated on the bottom side of FIG. 1 relative to the output shaft 11 such that the board surface of the control board 41 is parallel to the output shaft 11.

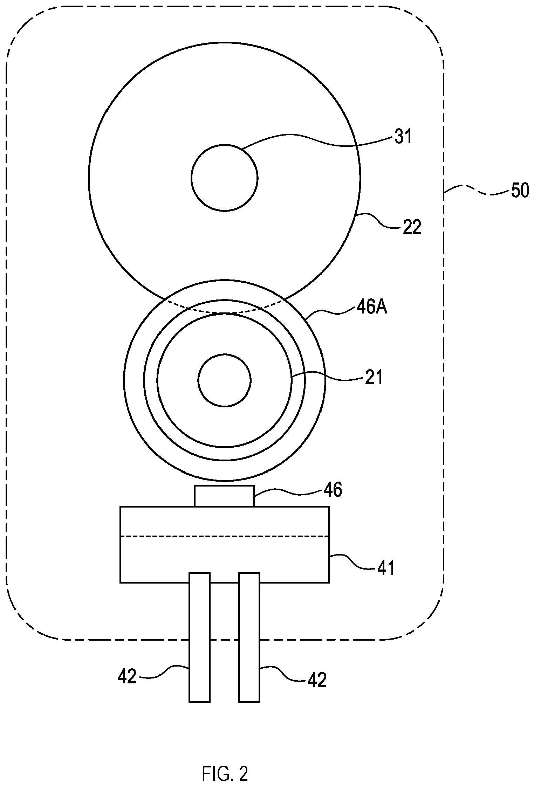

The connector 42 is a part for an external connection and is disposed on the control board 41. Although it does not limit the present disclosure, the connector 42 according to the present embodiment has a convex shape as shown in FIG. 2. A terminal of the connector 42 is fixed to the control board 41.

As shown in FIG. 1, a part of the control board 41 facing the output shaft 11 includes a power supplier 45. The power supplier 45 supplies the brush 43 with an electric power. The brush 43 supplies a coil of the electric motor 10 with an electric power via a commutator 44.

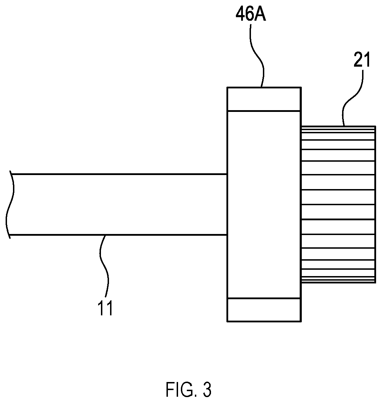

A sensor 46 for sensing a rotation of the electric motor 10 is mounted on the controller 40. The sensor 46 senses a rotation of the electric motor 10 in cooperation with a permanent magnet 46A (see FIG. 3) that integrally rotates with the output shaft 11.

Although it does not limit the present disclosure, the sensor 46 according to the present embodiment includes a magnetic sensor such as a Hall IC. The sensor 46 senses positions of magnetic poles of the permanent magnet 46A that alternate in association with a rotation of the output shaft 11.

Thus, in the actuator 1 according to the present embodiment, the operation of the electric motor 10 can be externally adjusted according to a driving state of the electric motor 10, and at the same time, the rotational position of the electric motor 10 can be sensed by a simple configuration using a magnet.

### <3. Features of Actuator according to the Present Embodiment>

In the actuator 1 according to the present embodiment, the control board 41 is situated between the electric motor 10 and the worm wheel 32, and the connector 42 is disposed on the control board 41. Thus, according to the actuator 1 of the present embodiment, the longitudinal dimension of the actuator 1 can be reduced easily compared to that of the actuator disclosed in Patent Document 1.

In addition, since the worm wheel 32 is situated on the same side as the output shaft 11 relative to the worm 31, the width of the actuator 1, which is the dimension of the actuator 1 in a direction orthogonal to the longitudinal direction, can be easily reduced. In other words, if the worm wheel 32 is situated on the side opposite to the output shaft 11 across the worm 31, it is difficult to reduce the width of the actuator 1.

### (Other Embodiments)

The actuator according to the aforementioned embodiment includes an electric motor having the brush 43 and the commutator 44. The present disclosure is nevertheless not limited thereto. Alternatively, the present disclosure may include a DC brushless motor using the sensor 46, for example.

The sensor 46 according to the aforementioned embodiment includes a magnetic sensor such as a Hall IC. The present disclosure is nevertheless not limited thereto. Alternatively, the present disclosure may include an optical sensor having a light emitter and a photodetector, for example.

Furthermore, the present disclosure is not limited to the aforementioned embodiments as long as it conforms to the gist of the claims. Therefore, the present disclosure may include a configuration obtained by combining at least two of the aforementioned embodiments, or a configuration in which any one of the elements of the aforementioned embodiments is eliminated.

## Claims

1. An actuator comprising:
an electric motor;
a first gear disposed on an output shaft of the electric motor;
a second gear meshed with the first gear to cooperate with the first gear and transmit a rotation of the output shaft as a decelerated rotation;
a worm extending in a direction parallel to the output shaft, the second gear being disposed on one end side of the worm in a direction of extension of the worm;
a worm wheel meshed with the worm and situated on a same side as the output shaft relative to the worm; and
a control board for controlling the electric motor, the control board being situated between the electric motor and the worm wheel,
wherein the control board includes a connector for an external connection.

2. The actuator according to claim 1,
wherein the control board is situated such that a board surface of the control board faces the output shaft, and
wherein a power supplier configured to supply a brush with an electric power and a sensor configured to sense a rotation of the electric motor are mounted on a part of the control board facing the output shaft.

3. The actuator according to claim 2,
wherein the control board is situated on a side opposite to the worm across the output shaft.
